**Europäisches Patentamt**

**European Patent Office**

**Office européen des brevets**

(11) Publication number: **0 438 990 A1**

## EUROPEAN PATENT APPLICATION

(21) Application number: **90830618.6**

(22) Date of filing: **28.12.90**

(51) Int. Cl.⁵: **F16L 55/17, F16L 47/00**

(30) Priority: **26.01.90 IT 332290**

(43) Date of publication of application:
**31.07.91 Bulletin 91/31**

(84) Designated Contracting States:
**AT BE CH DE DK ES FR GB GR LI LU NL SE**

(71) Applicant: **ALPRENE S.a.s. di Baldussi Ezio & C.**
**Via del Gomito, 23**
**I-40127 Bologna(IT)**

(72) Inventor: **Baldussi, Ezio**
**Via Pier De Crescenzi, 9**
**I-40131 Bologna(IT)**

(74) Representative: **Lanzoni, Luciano**
**c/o BUGNION S.p.A. Via dei Mille, 19**
**I-40121 Bologna(IT)**

(54) **Coupling for pipes made of plastic.**

(57) This coupling, on one of the two semicylindrical elements (1a and 1b), which when joined compose the main body (4) of the coupling, has on its surface in contact with the pipe (2), a seat (5) within which can be removably housed, locking means (3) which operate on the pipe (2) penetrating into it by an amount no greater than the thickness (S) of the pipe (2), in such a manner as to prevent the latter from moving axially and torsionally when the two semicylindrical elements (1a and 1b) are joined together and locked so as to form the coupling (4).

FIG 1

## COUPLING FOR PIPES MADE OF PLASTIC

This invention concerns a coupling for pipes made of plastic.

The use of couplings of different types and dimensions for joining together lengths of pipe, particularly pipes made of plastics such as PVC or PE, is well established.

Some couplings (of a cylindrical type for simple coaxial joints, or T-shaped for three-way joints or off-take joints) consist of a cylindrical main body divided into two equal halves, which can be joined to each other and each of which has, on the edge which is designed to come into contact with the edge of the opposite half, a pair of flanges shaped like truncated cones; the flanges of the two halves, when joined form two conical guides positioned opposite each another, on the outer surface of the main body, which engage, so as to lock the main body in a joined position, with corresponding, press-fit sliding elements, the internal profile of which matches that of the guides.

Obviously in the case of T-shaped joints one of the halves is made with a cylindrical off-take (usually perpendicular to the direction of the main body) which opens out within the same main body and which is designed to form a sealed joint with an off-take pipe to be coupled to the main pipe, the latter having a corresponding opening.

With this type of coupling, a joint is obtained by placing the main pipe on the half without the off-take and subsequently placing the other half, containing the off-take, over the main pipe, taking care to position the off-take over the opening in the pipe; finally the coupling thus formed is locked into place (and the pipe compressed) by engaging together the guides and the sliding elements.

When plastic pipes are used however there is often the risk that the pipe itself may partially unfasten itself or move, axially or torsionally with respect to the off-take coupling, on account mainly of the plastic's inherent characteristics of elasticity: and an increase of pressure, for example, followed by a sudden immediate decrease, may cause a corresponding expansion and contraction of the section of the pipe (partially amplified by the coupling), which therefore subsequently tends first to move, and then to displace itself with respect to the off-take joint, consequently producing a reduction in the seal of the latter and a risk of the pipes and the off-takes coming apart. The aim of this invention is therefore to eliminate the drawbacks outlined above by producing a coupling, internally structured in such a manner as to prevent possible unfastening or movements of the pipes joined within it.

The invention, as it is characterised in the claims, solves the problem by making a coupling, wherein one of the two semicylindrical elements, which joined together make up the main body of the coupling, has on it, on the surface in contact with a pipe, a seat within which locking means can be removably housed, which act on the pipe, penetrating into it, in such a manner as to prevent the latter from moving axially and torsionally when the two semicylindrical elements are joined and locked together to form the coupling.

The advantages and the characteristics of this invention are explained in greater detail in the detailed description which follows, with reference to the accompanying diagrams, these being only one example of the invention and not to be interpreted as being in any way restrictive, in which:.

- Figure 1 is a perspective exploded view of a coupling with the device represented by this invention;

- Figure 2 shows a side cutaway view of the coupling referred to in Figure 1.

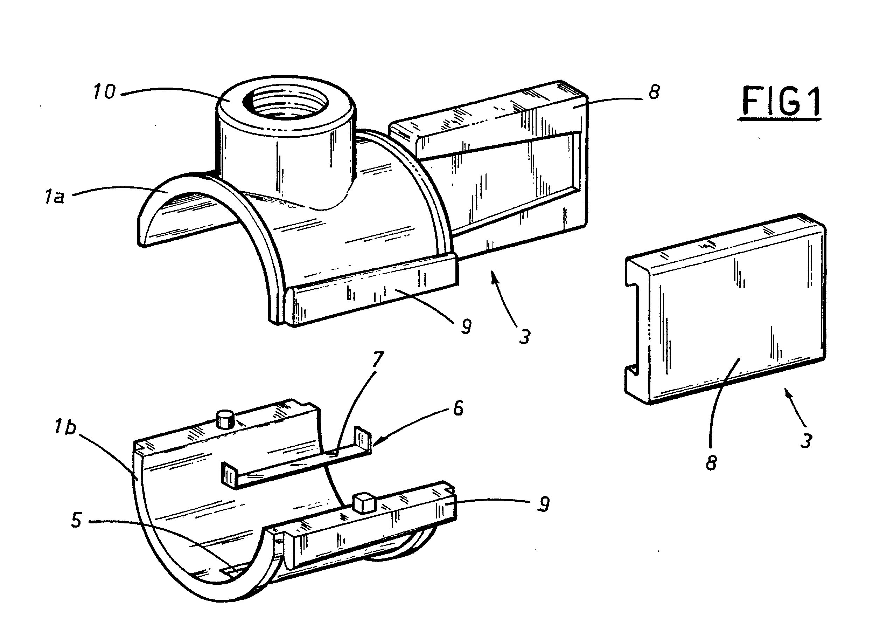

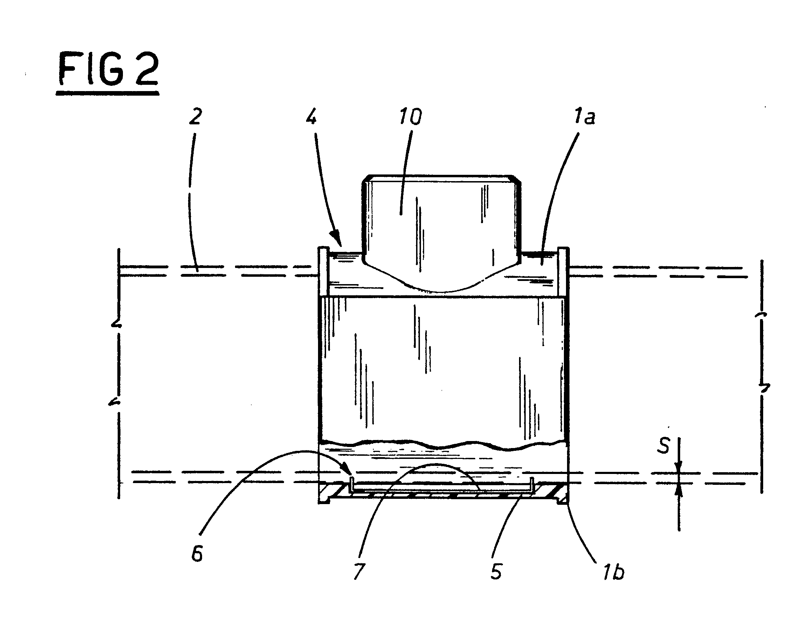

As shown in the enclosed diagrams, the coupling, designed to join together lengths of plastic pipe, is formed by two semicylindrical elements 1a and 1b (which from now on for greater simplicity we will refer to as halves), substantially symmetrical, which on opposite sides encircle the pipe or pipes 2 to be joined together. These halves 1a and 1b are joined together by external locking means 3, which operate on the edges of the two touching halves 1a and 1b, in such a manner as to form a main body 4 aligned coaxially with respect to the pipe 2. More precisely the locking means 3 shown in Figure 1 consist of a pair of sliding elements 8, both of which have a cone-shaped internal profile which, sliding, can engage complementarily with corresponding guides 9 made on the edges of the halves 1a and 1b and substantially symmetrical. When the two halves 1a and 1b are joined together, these guides form a cone-shaped profile, in such a manner as to allow the slider 8 to lock the main body thus formed and at the same time to exert pressure, within the latter, upon the pipe or pipes to be joined (in the example illustrated in Figures 1 and 2 the half 1a has an off-take 10, thus forming a T-shaped coupling).

The above mentioned device envisages that one of the halves 1a and 1b should have, on the surface designed to be in contact with the pipe 2, a seat 5, in which locking means 6 can be removably housed, which act upon the same pipe 2, in such a manner as to prevent the latter from moving axially when the halves 1a and 1b are already joined and locked by the sliders 8.

In the specific case illustrated in Figure 2 the locking means 6 consist of a U-shaped clip element 7, fixed to the inside of the seat 5 in such a manner that its ends are free, and are located in correspondence with the ends of the same seat, projecting beyond the latter by an amount no greater than the thickness, indicated with S, of the pipe 2.

More precisely the clip 7 and relative seat 5 are located on the matching semicylindrical element in correspondence with the axis of the off-take 10 so as to operate near the point where stress on the pipe 2 is greatest; the ends of the clip 7 (preferably made of metal), which is inserted into the seat 5, penetrate into the pipe 2 when this is compressed by the joining of the two halves 1a and 1b, thus allowing the pipe to be locked axially in the desired position and eliminating the possibility of the pipe slipping on account of its elasticity.

The advantages offered by such a solution are clear, since the clip 7 (or an equivalent locking means) is inserted only when it is necessary to lock the pipe: that is when dealing with pipes in plastic or in any case with pipes whose characteristics of elasticity are such as to amplify axial or torsional movements inside the coupling. At the same time the seat 5 can be fitted in any case since it does not alter the structural characteristics of the coupling.

This invention can be subjected to numerous modifications and variations, all of which are within the terms of the invention. Furthermore any or all of these details can be replaced by their technical equivalents.

## Claims

1. A coupling for pipes made of plastic formed by two, almost identical, semicylindrical elements (1a and 1b), designed to encircle from opposite sides the pipe or pipes (2) to be joined and which can be joined together using external locking means (3) which operate on the edges, which are in contact, of the said two halves (1a and 1b) in such a manner as to form a main body (4) aligned coaxially with respect to the pipe (2), wherein at least one of the said semicylindrical elements (1a and 1b) has, on its surface in contact with the pipe (2) locking means (6), protruding radially from the said surface, capable of operating on the pipe in such a manner as to prevent the latter from moving axially in correspondence with the joint of the two said semicylindrical elements (1a and 1b).

2. A device according to claim 2, wherein the said locking means (6) consist of a U-shaped clip element (7), which can be removably housed within a corresponding seat (5) made in at least one of the said semicylindrical elements, (1a, 1b).

3. A device according to claim 2, wherein the said clip element (7) is U-shaped and has its ends free, positioned at the ends of the said seat (5), projecting into the pipe (2) by an amount no greater than the thickness (S) of the pipe (2).

4. A device according to claim 1 in which one of the semicylindrical elements (1a and 1b) has on its outside surface, an off-take (10) for a T-joint, wherein the said locking means (6) are located on the semicylindrical matching element and in correspondence with the axis of the said off-take (10).

FIG1

EP 0 438 990 A1

FIG 2

European
Patent Office

EUROPEAN SEARCH
REPORT

Application Number

EP 90 83 0618

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | FR-A-1 591 644 (MANALT)<br>* Figure 1; claim 1 * · <br>— — — | 1,4 | F 16<br>L 55/17<br>F 16 L 47/00 |
| X | DE-C-2 000 86 (DEUTSCH-OESTERREICHISCHE MANNESMANNRÖHREN-WERKE)<br>* Figures 3,4; claims 1,2 *<br>—·— — | 1 | |
| A | BROCHURE FROM POLVA-NEDERLAND N.V. ENK-HUIZEN, 23rd October 1962; "Polva aanboorsysteem gas"<br>— — — — — | 1,4 | |

TECHNICAL FIELDS
SEARCHED (Int. Cl.5)

F 16 L

The present search report has been drawn up for all claims

| Place of search | Date of completion of search | Examiner |
|---|---|---|
| The Hague | 26 March 91 | BUDTZ-OLSEN A. |

CATEGORY OF CITED DOCUMENTS
X : particularly relevant if taken alone
Y : particularly relevant if combined with another
document of the same catagory
A : technological background
O : non-written disclosure
P : intermediate document
T : theory or principle underlying the invention

E : earlier patent document, but published on, or after
the filing date
D : document cited in the application
L : document cited for other reasons

&: member of the same patent family, corresponding
document